# EUROPEAN PATENT APPLICATION

(11) **EP 1 158 778 A1**
(43) Date of publication of application: **28.11.2001**
(21) Application number: 00201862.0
(22) Date of filing: 26.05.2000
(51) Int. Cl.: H04N 1/60

(54) **Calibration method for digital camera and printer.**

(71) Applicant: AGFA-GEVAERT naamloze vennootschap, 2640 Mortsel (BE)
(72) Inventor: Leonard Jacques, c/o Agfa-Gevaert N.V. Corp.IB3800, B-2640 Mortsel, (BE)

(57) **Abstract**

A method for calibrating a digital camera and a printer whereon the image taken with such a camera is printed so as to have a faithful colour rendition. The method comprises the steps of : taking a picture of a test original with a digital camera to be calibrated creating a first set of digital data, feeding this first set of digital data to a computer memory, using this first set of digital data to drive a printer to be calibrated, producing a print of the different colour patches, taking a picture of this print with the same digital camera to have a second set of digital data, feeding the second set of digital data to the computer memory for comparing this second set with the first set of data and calculating a difference between these two sets, and using the calculated difference to provide a look-up table.

## Description

### FIELD OF THE INVENTION

This invention relates to a method for calibrating a digital camera and a printer whereon the image taken with such a camera is printed so as to have a faithful colour rendition.

### BACKGROUND OF THE INVENTION

When a end-user takes pictures with a digital camera and subsequently prints these pictures using a PC and a printer at home without any digital image processing, the results may be disappointing especially in the area of faithful colour rendition.

This problem has been recognised and in, e.g., **US-A-6 011 547** it is described to add "recording information representing the recording condition" to the image information in the camera. The recording information representing the recording condition includes a.o. γ - property of the camera, focal length of the lens, colour temperature of the light wherein the picture is taken, etc. This solution to the problem requires the use of an adapted camera, but the end-user with a camera that can not add "recording information representing the recording condition" remains without a solution.

Several methods for adjusting the colour output of an output device, e.g., a printer, have been disclosed. In e.g. **EP-A-785 672** and **EP-A-942 589** such methods are disclosed.

There remains nevertheless the need to have a simple method for calibrating a digital camera and a printer whereon the image, taken with such a camera is printed, so as to have a faithful colour rendition.

### OBJECTS AND SUMMARY OF THE INVENTION

It is an object of the invention to provide a method for calibrating a digital camera and the printer whereon the image, taken with such a camera is printed, so as to have a faithful colour rendition that is simple, independent of the camera and the printer and that easily can be used by the end-user.

It is a further object of the invention to provide such a simple method for calibrating a digital camera and the printer whereon the image, taken with such a camera is printed, so as to have a faithful colour rendition, that is suitable to performed when changing, e.g., printing stock and/or printing inks.

Further objects and advantages of the method will become clear from the detailed description hereinafter.

The objects of the invention are realised by providing a method for calibrating a digital camera and the printer whereon the image, taken with such a camera is printed comprising the steps of :
- providing a test original comprising different colour patches,
- taking a picture of said test original with a digital camera to be calibrated creating a first set of digital data,
- feeding said first set of digital data to a computer memory,
- using said first set of digital data to drive a printer to be calibrated, producing a print of said different colour patches,
- taking a picture of said print with said same digital camera to have a second set of digital data,
- feeding said second set of digital data to said computer memory for comparing said second set with said first set of data and-calculating a difference between said two sets, and using said calculated difference to provide a look-up table.

### DETAILED DESCRIPTION OF THE INVENTION

The quality, especially the faithful colour rendition of a print of a picture taken with a digital camera depends largely on how that camera "sees" the different colours and how the printer renders the colours on the final substrate.

It was now found that a digital camera and a printer could easily be calibrated, without having to know the response function of the camera, as is the case in the disclosure of EP-A-942 589. The method comprises basically the steps of :
- making a picture of a test original with the camera to be calibrated and storing the picture data in a computer memory, producing on the printer to be calibrated a print of a picture of a test original without any correction, the colour rendition in this print will to a lesser or greater extent differ from the colours in the test original. Then a picture of this print is taken with the same digital camera to be calibrated and the data of this picture are fed to a computer memory that already contains the data of the picture of the test original. In the computer memory the differences are quantified and a look-up table is generated and stored in the computer memory for correcting the output data that are used to drive the printer so as to have a faithful colour reproduction. The method of the invention can be repeated several times in order to increase the accuracy of the colour rendition, ie. several iteration through the process can be performed.

The test original can be any test original known in the art, e.g., the IT8 7/2 card used for reflection work. This card includes 48 patches colour patches for shadow tones, 48 for midtones, and 48 for highlight toners, further there are for each of CMYK and RBG a wedge with 12 steps, and free selectable colours. This card is quite sophisticated and a large amount of differences has to be calculated, which may be well suited for the very advanced photo amateur photographer or a professional photographer, but which can be seen as too complicated for use by the average photo amateur. Therefore a much simpler test original can be made with e.g. 4 shades of blue, four shade of green and four schades of red, so that the algorithm for comparing the differences can be simpler and faster. The number of shades for the different colours included in the test original can be chosen so as to create the best compromise between simplicity of the calibration and accuracy thereof. In an extremely simple way, the method of the invention is implemented with a test original containing only 3 colours. Preferably however, a test original for use in the present invention, comprises patches with the same chromaticity, but with different density.

The software to be used can be a simple software that only compares the signals and makes the LUT, it can be a more sofisticated software that recognizes the printer that is used and that automatically adjust the printer setting (e.g., in ink-jet printers the amount of ink) so as to be able to have a more accurate comparison and correction via the LUT.

A very suitable way to provide the buyer of a digital camera with a test original is printing this original on the packing of the camera, so that the buyer automatically is provided with a test original. Thus this invention includes a package containing a digital camera with a wrapping provide with test original. In the packing of the camera the software needed to implement the method of this invention can also be provided on a suitable data carrier, e.g. a floppy disk, CD-ROM, etc..

The method of this invention can be implemented when the picture of the test original is taken with the digital camera under daylight illumination to give a "daylight look-up" table, it can be implemented when the picture of the test original is taken with the digital camera under artificial illumination to give a " artificial light look-up" table, etc.. The user of the digital camera can calibrate the camera and printer for any light source.

The method is very well suited in its simplicity to calibrate the camera and printer each time that either inks in an ink-jet printer are changed or printing stock is changed.

## Claims

1. A method for calibrating a digital camera and the printer whereon the image, taken with such a camera is printed comprising the steps of :
- providing a test original comprising different colour patches,
- taking a picture of said test original with a digital camera to be calibrated creating a first set of digital data,
- feeding said first set of digital data to a computer memory,
- using said first set of digital data to drive a printer to be calibrated, producing a print of said different colour patches,
- taking a picture of said print with said same digital camera to have a second set of digital data,
- feeding said second set of digital data to said computer memory for comparing said second set with said first set of data and-calculating a difference between said two sets, and using said calculated difference to provide a look-up table.

2. A package containing a digital camera with a wrapping provided with test original for executing the method of claim 1.
